Europäisches Patentamt

European Patent Office

Office européen des brevets

(11) Veröffentlichungsnummer: **0 259 509 B1**

## (12) EUROPÄISCHE PATENTSCHRIFT

(45) Veröffentlichungstag der Patentschrift: **27.11.91**

(51) Int. Cl.⁵: **G01P 3/36**

(21) Anmeldenummer: **86112470.9**

(22) Anmeldetag: **09.09.86**

(54) Verfahren zur Drehratenmessung und Drehratensensor mit faseroptischem Sagnac-Interferometer.

(43) Veröffentlichungstag der Anmeldung:
**16.03.88 Patentblatt 88/11**

(45) Bekanntmachung des Hinweises auf die
Patenterteilung:
**27.11.91 Patentblatt 91/48**

(84) Benannte Vertragsstaaten:
**CH DE FR GB IT LI NL SE**

(56) Entgegenhaltungen:
**EP-A- 0 112 143**
**EP-A- 0 160 450**

(73) Patentinhaber: **LITEF GmbH**
**Lörracher Strasse 18**
**W-7800 Freiburg/Br.(DE)**

(72) Erfinder: **Schröder, Werner, Dr. Dipl.-Phys.**
**Vogtstrasse 5**
**W-7834 Bleichheim(DE)**

(74) Vertreter: **TER MEER - MÜLLER - STEINMEI-STER & PARTNER**
**Mauerkircherstrasse 45**
**W-8000 München 80(DE)**

## Beschreibung

Die Erfindung betrifft ein Verfahren zur Drehratenmessung sowie einen Drehratensensor unter Verwendung eines faseroptischen Sagnacinterferometers.

Bei der Verwendung von Sagnacinterferometern als Drehratensensoren insbesondere von faseroptischen Sagnacinterferometern stellt sich in Strapdown-Systemen das Problem der Skalenfaktorwiederholbarkeit, insbesondere und beispielsweise bedingt durch Temperatureinflüsse, und der Linearität, das im wesentlichen in der Wahl der Rückstellung bzw. der Lichtquelle begründet liegt.

Zur Verbesserung der Linearität von Sagnac-Drehratensensoren in Open-Loop-Konfiguration über einen größeren Dynamikbereich ist es aus der Europäischen Patentanmeldung EP-A-0 160 450 bekannt, das Ausgangssignal mit der den Phasenmodulator der Sensorspule beaufschlagenden Frequenz einer Amplitudenmodulation zu unterwerfen, um die der Drehrate entsprechende optische Phasenverschiebung in eine Phasenverschiebung eines elektrischen Signals relativ niedriger Frequenz umzusetzen und die Phasenverschiebung nach Filterung beispielsweise mittels eines digitalen Zeitintervallzählers zu messen.

Der Erfindung liegt die Aufgabe zugrunde, ein Verfahren zur Drehratenmessung insbesondere mittels eines faseroptischen Sagnacinterferometers und einen Drehratensensor mit einem solchen Sagnacinterferometer zu schaffen, bei denen die Skalenfaktorwiederholbarkeit gewährleistet und eine hohe Linearität des Meßergebnisses auch bei vergleichsweise großen Drehraten gewährleistet werden können.

Der Grundgedanke der Erfindung ist hinsichtlich des Verfahrens im Patentanspruch 1 zusammengefaßt, während ein Drehratensensor mit faseroptischem Sagnacinterferometer gemäß der Erfindung die im Patentanspruch 6 angegebenen Merkmale aufweist.

Vorteilhafte Weiterbildungen und Ergänzungen des Erfindungsgedankens sind in jeweils abhängigen Patentansprüchen gekennzeichnet. Die Erfindung beruht auf der Idee, die Verwendung des Sagnac-Effekts sowohl zur Drehratenmessung als auch zur (mechanischen) Rückstellung eines Drehratensensors (Kreisels) zu verwenden.

Die besonderen Vorteile der Erfindung lassen sich anhand der folgenden Gleichungsableitungen für den Fachmann in ihrer grundsätzlichen Bedeutung unschwer erkennen.

Der Faserring eines Sagnacinterferometers habe die Gesamtlänge $L_G = L + \ell$.

Die Sagnacphase ist in der kreiselfesten Faserspule der Länge L mit Radius R

$$\Phi_S = \frac{4\Pi \cdot L \cdot R}{\lambda \cdot c} \cdot \Omega \quad ,$$

wobei $\Omega$ die Drehrate im Inertialraum, $\lambda$ die Wellenlänge des verwendeten Lichts und c die Lichtgeschwindigkeit bezeichnen. Wird ein Teil der Meßspule des Sagnacinterferometers mit dem Radius r und der Faserlänge $\ell$ drehbar und durch einen Motor angetrieben gelagert, so ergibt sich die Phasenverschiebung

$$\Phi_S^R = \frac{4\Pi \cdot \ell \cdot r}{\lambda \cdot c} \cdot \Phi_R$$

aufgrund der Rotation $\Phi_R$ gegenüber dem Inertialraum.

Wird nun die Drehzahl des Motors so geregelt, daß

$$\Phi_S^R = \Phi_S$$

gilt, so ergibt sich:

$$\frac{4\Pi L \cdot R}{\lambda \cdot c} \Omega = \frac{4\Pi \cdot \ell \cdot r}{\lambda \cdot c} \Omega_R \quad .$$

$$L \cdot R \cdot \Omega = \ell \cdot r \cdot \Omega_R$$

Werden die Drehachsen der Meßspule bzw. des im folgenden als "Rückstellspule" bezeichneten Teils der Meßspule parallel gewählt, d.h. abgekürzt die Drehachsen von $\Omega$ und $\Omega_R$ sind parallel, so ergibt sich bei der Messung der Drehrate der Rückstellung gegen das kreiselfeste System:

$$\Omega_M = \Omega - \Omega_R = \Omega\,(1 - \frac{L \cdot R}{\ell \cdot r})\ .$$

Wird $\Omega_M$ gemessen, so läßt sich die Drehrate $\Omega$ bestimmen zu

$$\Omega = \Omega_M\,(1 - \frac{L \cdot R}{\ell \cdot r})^{-1}\ .$$

Aus diesem Ergebnis lassen sich folgende Vorteile der Erfindung erkennen:
- Die Drehrate $\Omega_M$ kann wesentlich größer sein als $\Omega$ , da das Transformationsverhältnis frei wählbar ist.
- Das Transformationsverhältnis ist nur noch von geometrischen Größen abhängig, jedoch nicht mehr vom Brechungsindex oder der Wellenlänge der Lichtquelle.
- Werden beispielsweise die Materialien für die Rückstellspule und die Meßspule gleich gewählt, so verschwindet eine Temperaturabhängigkeit des Skalenfaktors völlig. Entsprechendes gilt für eine Anordnung, bei der sich die gesamte Spule auf dem Drehkörper befindet, so daß gilt $\ell = L_G$.

Sogenannte Open-Loop-Interferometer mit inertialer Genauigkeit sind bereits prinzipiell bekannt. Solche Interferometer lassen sich nun auf einfache Weise rückstellen, ohne ihre Nullpunktstabilität zu verlieren.

Gemäß einer vorteilhaften Weiterbildung des Erfindungsgedankens kann die Drehrate $\Omega_M$ relativ einfach beispielsweise mittels einer optischen Decodierscheibe gemessen werden. Wird die Codiermarkierung durch mindestens zwei oder auch mehr Photodioden ausgelesen, kann sowohl die Drehrate als auch die Drehrichtung mit hoher Auflösung ermittelt werden, und zwar einer Auflösung, die besser ist als die durch die Teilung der Codiermarkierungen vorgegebene.

Aufgrund der transformatorischen Übersetzung der beispielsweise über die optische Decodierscheibe gemessenen Drehrate $\Omega_M$ zur Bestimmung der tatsächlichen Drehrate $\Omega$, ließe sich der Erfindungsgegenstand auch als "optomechanischer Drehratentransformator" bezeichnen.

Die Erfindung und vorteilhafte Einzelheiten sowie Ergänzungen werden nachfolgend unter Bezug auf die Zeichnung in beispielsweisen Ausführungsformen näher erläutert. Es zeigen:

Fig. 1      den prinzipiellen Aufbau eines Drehratensensors mit faseroptischem Sagnacinterferometer und optomechanischem Drehratentransformator gemäß der Erfindung;

Fig. 2      den konstruktiven Aufbau des Drehratensensors nach Fig. 1;

Fig. 3      den prinzipiellen Aufbau einer anderen Ausführungsform eines Drehratensensors mit erfindungsgemäßen Merkmalen;

Fig. 4      den konstruktiven Aufbau der Drehratensensoranordnung nach Fig. 3 und

Fig. 5      ein weiteres grundsätzliches Ausführungsbeispiel der Erfindung.

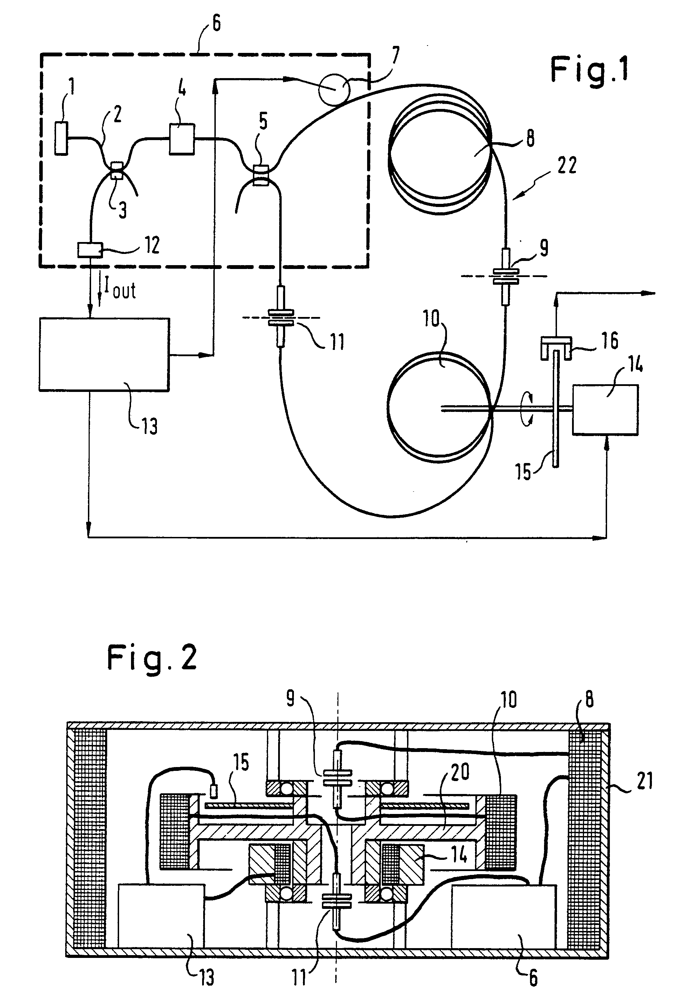

Zunächst wird kurz die prinzipielle Aufbauanordnung eines Drehratensensors mit erfindungsgemäßen Merkmalen nach Fig. 1 erläutert.

Licht einer vorzugsweise breitbandigen Lichtquelle 1 wird in eine Einzelmodenfaser 2 eingestrahlt und durchquert einen Faserrichtkoppler 3 sowie ein Modenfilter 4 (Polarisator und Raumfilter) und gelangt über einen Faserrichtkoppler 5 in ein (nachfolgend näher erläutertes) Sagnacinterferometer. Der soweit beschriebene optische Aufbau kann in einem einzigen Auslesemodul 6 zusammengefaßt sein.

Die Länge des Sagnacinterferometers 22 wird mittels eines Phasenmodulators 7 in bekannter Weise periodisch phasenmoduliert. Das Licht durchläuft von der Kopplerstelle 5 aus eine Fasermeßspule 8, eine optische Drehverbindung 9, vorzugsweise bestehend aus zwei Gradientenlinsen (Selfoc-Linsen) und zwei Viertelwellenlängenplättchen ($n\frac{\lambda}{4}$-Plättchen; n = 1,3,5,...)je eines mit einer Selfoc-Linse fest verbunden, um Effekte der Drehung auf die Polarisation auszuschließen, eine Rückstellspule 10 und eine weitere optische Drehverbindung 11, um sich dann mit dem Licht der Gegenrichtung im Faserrichtkoppler 5 zu vereinen. Das rückkehrende interferierende Licht durchläuft wiederum das Modenfilter 4 in umgekehrter Richtung und wird über den Faserrichtkoppler 3 in an sich bekannter Weise auf eine Photodiode 12 geleitet, deren Signal in einer Regelelektronik 13 verarbeitet wird.

Die Regelelektronik 13 liefert einmal das Stellsignal für den Phasenmodulator 7; sie sorgt andererseits dafür, daß durch Drehen der Rückstellspule 10 mittels eines Motors 14 das Interferometer 22 immer am selben Arbeitspunkt, d.h. auf dem scheinbaren Drehratensignal "0" betrieben wird. Mittels einer mit der Achse des Motors 14 verbundenen Decodierscheibe 15 kann über eine optoelektronische Auslesevorrichtung 16 die inertiale Drehrate $\Omega_M$ digital abgelesen und durch transformatorische Umrechnung entsprechend der oben angegebenen Gleichungsbeziehung die tatsächliche inertiale Drehrate errechnet werden.

Die Rückstellspule 10 sollte soweit wie möglich mittig innerhalb der Meßspule 8 angeordnet werden, gesehen in Längsrichtung der Faser, um so Temperaturgradientenänderungseffekte möglichst klein zu halten.

Die Fig. 2 läßt den konstruktiven Aufbau der Drehratenmeßvorrichtung nach Fig. 1 erkennen. Die Rückstellspule 10 ist auf einen rotationssymmetrischen Drehkörper 20 gewickelt, der koaxial und hinsichtlich seiner Längserstreckung mittig innerhalb der Meßspule 8 im Sensorgehäuse 21 gelagert ist. Die Drehverbindungen 9 und 11 sind, wie dargestellt, achsparallel zur Drehachse angeordnet. Der Motor 14 kann, wie dargestellt, unmittelbar auf einen Ansatz am Drehkörper 20 drehfest aufgesteckt sein.

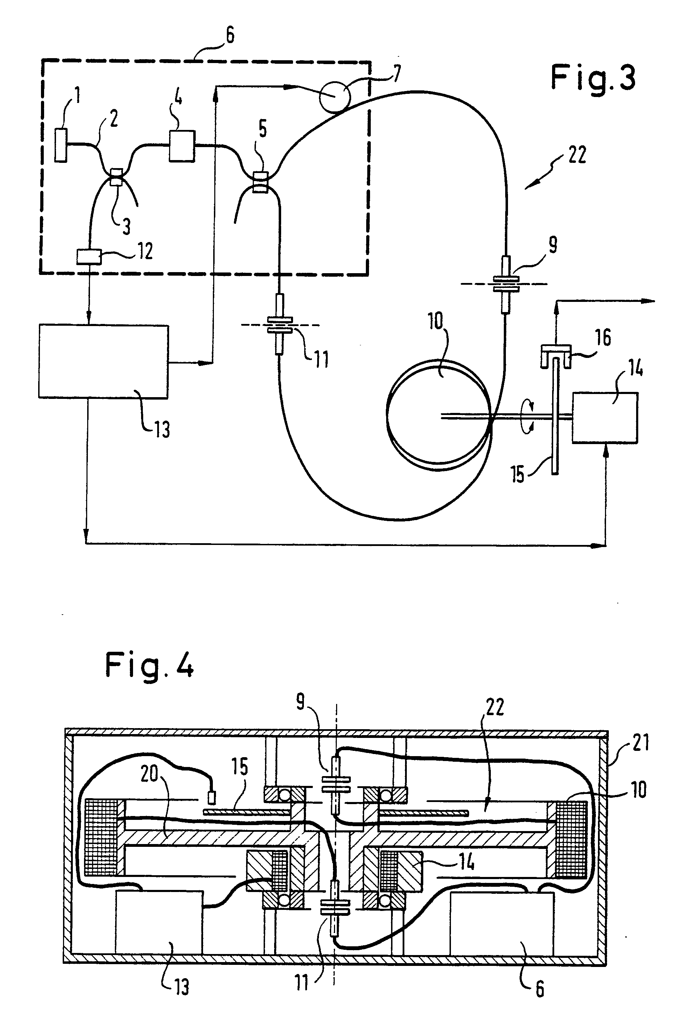

Die Fig. 3 und 4 zeigen eine andere Ausführungsform, bei der die Meßspule 8 entfällt. Der Vorteil dieser Anordnung liegt vor allem darin, daß die Rückstellspule 10 bezüglich der Drehung um ihre Drehachse inertialraumfest bleibt, d.h. vom rückstellenden Motor 14 ist nur eine geringe Leistung aufzubringen.

Die Schnittstelle für die optische Drehverbindung kann auch an anderer und prinzipiell beliebiger Stelle erfolgen. Allerdings sind dann elektrische Schleifringe erforderlich, die einer gewissen Abnutzung im Drehbetrieb unterliegen.

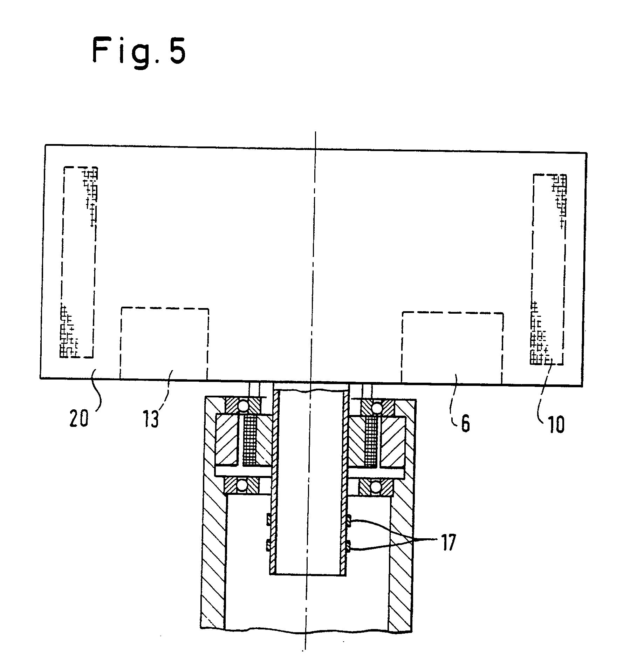

Bei einer weiteren in Fig. 5 dargestellten prinzipiellen Ausführungsform ist der gesamte Faserkreisel einschließlich des Auslesemoduls 6 und der Rückstellelektronik 13 auf dem rückzustellenden Drehteil 20 untergebracht. Ersichtlicherweise sind jetzt nur Schleifringzuführungen 17 für die Versorgungsspannungen erforderlich. Jeglicher optische Drehverbinder entfällt.

Zur weiteren Erläuterung des Erfindungsgedankens und insbesondere zur Abschätzung der erforderlichen Leistung für die Rückstellung der Rückstellspule seien wesentliche Daten eines Ausführungsbeispiels der Erfindung anhand eines Strapdown-Kreisels mit inertialer Genauigkeit wiedergegeben.

Vorgegeben wurden folgende Daten:

```
Maximale Drehrate              :      60 Grad /sec

Maximale Drehbeschleunigung    :    1000 Grad/sec²

Faserlänge                     :    2000 m

Spulendurchmesser              :      30 cm

Skalenfaktor (open loop)       :    75 µrad/Grad/h

Optische Biasstabilität        :    10⁻⁷ rad

Biaswiederholbarkeit           :    1,3 x 10⁻³ Grad/h

Transformationsverhältnis      :    1 : 50
```

Die Encoderscheibe hat eine Teilung 1/3600, die optisch ausgelesen wird.

Bei maximaler Drehrate drehte der die Rückstellung bewirkende Motor 14 mit 8,5 U/sec = 500 U/min. Wird angenommen, daß das Trägheitsmoment der Rückstelleinrichtung $\theta = 10^{-4}$ kg m$^2$ beträgt und wird eine maximale Drehbeschleunigung von 50.000 Grad/sec$^2$ angenommen, so errechnet sich die dazu notwendige Motorleistung:

$$P = \theta \cdot \omega \cdot \dot{\omega} = 4,6 \text{ W.}$$

Die aufgebrachte Leistung wird in erster Linie nicht in Wärme sondern in kinetische Energie umgesetzt. Die Motorelektronik kann dabei so ausgelegt werden, daß diese Energie beim Abbremsen wiedergewonnen wird und etwa einer Pufferbatterie zugeführt werden kann.

Durch Auflösung und Übersetzung gemäß obigen Gleichungen ergibt sich eine Winkelauflösung von 2 x $10^{-3}$ Grad = 7,2 $\overline{\text{sec}}$ bei geringen Anforderungen an die Codier/Decodiereinheit. Einer Drehrate von 1 Grad/h entspricht dabei eine Ausgangsfrequenz von 0,14 Hz. Durch Verwendung von Quadrantendetektoren im optoelektronischen Abtaster 16 läßt sich die Auflösung mit nur geringem Aufwand vervielfachen.

Insgesamt läßt sich feststellen, daß mit der Erfindung neue Möglichkeiten der Rückstellung für die Ausführung hochgenauer Strapdown-Kreisel in Fasertechnik eröffnet sind.

**Patentansprüche**

1.  Verfahren zur Drehratenmessung mittels eines faseroptischen Sagnacinterferometers in einem Sensorgehäuse (21),
    **dadurch gekennzeichnet, daß**
    - wenigstens ein Teil (10) der Faserspule (8) des Interferometers separat vom Gehäuse (21) und mittels eines motorischen Antriebs (14) relativ zum Gehäuse (21) drehbar gelagert wird,
    - das Interferometer-Ausgangssignal ($I_{out}$) als Eingangssignal (Istwert) einer Regelanordnung (13) zugeführt wird, welche die Drehzahl des motorischen Antriebs (14) so nachstellt, daß das Interferometer-Ausgangssignal bis auf eine Regelrestabweichung zu Null wird, und daß
    - die Drehrate des drehbar gelagerten Teils (10) der Faserspule (8) relativ zum Gehäuse (21) der Gesamtanordnung als Maß für die inertiale Drehrate ausgewertet wird.

2.  Verfahren nach Anspruch 1,
    **dadurch gekennzeichnet, daß** der drehbar gelagerte Teil (10) der Faserspule (8) koaxial und mittig innerhalb des übrigen Teils der Fasermeßspule (8) angeordnet wird.

3.  Verfahren nach Anspruch 2,
    **dadurch gekennzeichnet,** daß die Zu- und Ableitung des Lichts zu und von dem drehbar gelagerten Teil (10) der Faserspule (8) in Richtung der Drehachse über eine optische Drehverbindung (9, 11) erfolgt.

4.  Verfahren nach Anspruch 1,
    **dadurch gekennzeichnet,** daß die gesamte Faserspule (10) auf einem drehbar gelagerten Drehkörper (20) angeordnet ist und mittels des regelbaren motorischen Antriebs (14) rückgestellt wird.

5.  Verfahren nach Anspruch 4,
    **dadurch gekennzeichnet,** daß zusätzlich die Regelanordnung (12) und die zum Betrieb des Faserkreisels erforderliche Optik und Elektrooptik (6) auf dem von dem motorischen Antrieb (14) antreibbaren Drehkörper (20) angeordnet wird.

6.  Drehratensensor mit faseroptischem Sagnacinterferometer und einem Sensorgehäuse (21), **dadurch gekennzeichnet, daß**
    - wenigstens ein Teil (10) der Faserspule (8) des Interferometers separat vom Sensorgehäuse (21) auf einem durch einen Motor (14) angetriebenen und relativ zum Gehäuse (21) drehbaren Drehkörper (20) gewickelt ist,
    - eine elektronische Regelschaltung (13) vorgesehen ist, welcher das Interferometer-Ausgangssignal ($I_{out}$) als Eingangssignal zugeführt ist und welche die Drehzahl des Motors (14) so einstellt, daß das Interferometer-Ausgangssignal durch entsprechende Drehung des auf dem Drehkörper (20) gewickelten Teils (10) der Faserspule (8) relativ zum Gehäuse (21) bis auf eine Regelrestabweichung zu Null wird, und daß
    - eine Auslesevorrichtung (15, 16) vorgesehen ist, über die die Drehrate des Drehkörpers (20) relativ zum Sensorgehäuse (21) als Maß für die inertiale Drehrate erfaßt wird.

7.  Drehratensensor nach Anspruch 6,
    **dadurch gekennzeichnet,** daß die gesamte Faserspule (10) auf den Drehkörper (20) aufgebracht ist.

8.  Drehratensensor nach Anspruch 7,
    **dadurch gekennzeichnet,** daß zusätzlich die Regelschaltung (13) und die zum Betrieb des Faserkreisels erforderliche Optik und Elektrooptik (6) auf dem Drehkörper (20) angeordnet ist.

9.  Drehratensensor nach Anspruch 6,
    **dadurch gekennzeichnet, daß**
    - der Drehkörper (20) und der auf diesen gewickelte Teil (10) der Faserspule (8) koaxial und mittig innerhalb des übrigen Teils der Faserspule (8) gelagert sind, und daß

- die Zu- und Ableitung des Lichts zu und von dem auf den Drehkörper (20) gewickelten Teil (10) der Faserspule (8) in Richtung der Drehachse über je eine optische Drehverbindung (9, 11) erfolgt.

10. Drehratensensor nach Anspruch 9,
**dadurch gekennzeichnet,** daß die optischen Drehverbindungen (9, 11) durch Gradientenlinsen verwirklicht sind.

11. Drehratensensor nach Anspruch 10,
**dadurch gekennzeichnet,** daß die Gradientenlinsen Selfoc-Linsen sind.

12. Drehratensensor nach Anspruch 9, 10 oder 11,
**dadurch gekennzeichnet,** daß bei Verwendung von linear polarisiertem Licht im Bereich der Lichtein- bzw. -auskopplung $n\frac{\lambda}{4}$ -Plättchen eingesetzt sind, wobei mit $\lambda$ die Lichtwellenlänge und mit n eine ungerade ganze natürliche Zahl bezeichnet sind.

13. Drehratensensor nach Anspruch 9,
**dadurch gekennzeichnet** eine drehfest mit dem Drehkörper (20) verbundene Codiermarkierung, die zur Bestimmung der Drehrate optisch abgetastet wird.

14. Drehratensensor nach Anspruch 13,
**dadurch gekennzeichnet,** daß die Codiermarkierung auf dem Drehkörper (20) direkt oder auf eine mit diesem drehfest verbundene Codierscheibe (15) aufgebracht ist, und daß die optische Abtastung mittels eines Optokopplers, vorzugsweise mittels mindestens zweier Photodioden erfolgt, so daß sowohl die Drehrate als auch die Drehrichtung ausgelesen werden können und eine höhere Auflösung als durch die Teilung vorgegeben, erzielt wird.

15. Drehratensensor nach Anspruch 9,
**dadurch gekennzeichnet,** daß die Ein- und Auskopplung des Lichts in den auf den Drehkörper (20) gewickelten Teil (10) der Faserspule (8) längs der Drehkörperachse direkt über optische Wellenleiter erfolgt.

**Claims**

1. Method for rate-of-rotation measurement by means of a fibre-optic Sagnac interferometer in a sensor housing (21), characterised in that
   - at least a part (10) of the fibre coil (8) of the interferometer is supported separately from the housing (21), to be rotatable by means of a motor drive (14) relative to the housing (21),
   - the interferometer output signal ($I_{out}$) is fed as input signal (actual value) to a control arrangement (13) which corrects the rotational speed of the motor drive (14) in such a manner that the interferometer output signal becomes zero, apart from a residual control error, and that
   - the rate of rotation of the rotatably supported part (10) of the fibre coil (8) relative to the housing (21) of the overall arrangement is evaluated as a measure of the inertial rate of rotation.

2. Method according to Claim 1, characterised in that the rotatably supported part (10) of the fibre coil (8) is arranged coaxially and centrally inside the remaining part of the fibre sensing coil (8).

3. Method according to Claim 2, characterised in that the light is supplied to and from the rotatably supported part (10) of the fibre coil (8) in the direction of the axis of rotation via an optical rotational link (9, 11).

4. Method according to Claim 1, characterised in that the entire fibre coil (10) is arranged on a rotatably supported body of rotation (20) and is reset by means of the controllable motor drive (14).

5. Method according to Claim 4, characterised in that additionally, the control arrangement (12) and the optics and electro-optics (6) required for operating the fibre gyro is arranged on the body of rotation (20) which can be driven by the motor drive (14).

6

EP 0 259 509 B1

6. Rate-of-rotation sensor with fibre-optic Sagnac interferometer and a sensor housing (21), characterised in that
   - at least a part (10) of the fibre coil (8) of the interferometer is wound separately from the sensor housing (21), on a body of rotation (20) driven by a motor (14) and rotatable relative to the housing (21),
   - an electronic control circuit (13) is provided to which the interferometer output signal ($I_{out}$) is fed as an input signal and which adjusts the rotational speed of the motor (14) in such a manner that the interferometer output signal becomes zero, apart from a residual control error, by corresponding rotation of the part (10), wound on the body of rotation (20), of the fibre coil (8) relative to the housing (21), and in that
   - a read-out device (15, 16) is provided, via which the rate of rotation of the body of rotation (20) relative to the sensor housing (21) is recorded as a measure of the inertial rate of rotation.

7. Rate-of-rotation sensor according to Claim 6, characterised in that the entire fibre coil (10) is mounted on the body of rotation (20).

8. Rate-of-rotation sensor according to Claim 7, characterised in that additionally, the control circuit (13) and the optics and electro-optics (6) required for operating the fibre gyro is arranged on the body of rotation (20).

9. Rate-of-rotation sensor according to Claim 6, characterised in that
   - the body of rotation (20) and the part (10), wound onto the former, of the fibre coil (8) are coaxially and centrally supported inside the remaining part of the fibre coil (8), and in that
   - the light is supplied to and from the part (10), wound onto the body of rotation (20), of the fibre coil (8) in the direction of the axis of rotation via one optical rotational link (9, 11) each.

10. Rate-of-rotation sensor according to Claim 9, characterised in that the optical rotational links (9, 11) are implemented by means of gradient lenses.

11. Rate-of-rotation sensor according to Claim 10, characterised in that the gradient lenses are Selfoc lenses.

12. Rate-of-rotation sensor according to Claim 9, 10 or 11, characterised in that, if linearly polarized light is used, $n\frac{\lambda}{4}$ plates are used in the area where the light is coupled in and out, $\lambda$ designating the wavelength of light and n designating an odd integral natural number.

13. Rate-of-rotation sensor according to Claim 9, characterised by a coding marking which is rotationally rigidly connected to the body of rotation (20) and which is optically scanned for determining the rate of rotation.

14. Rate-of-rotation sensor according to Claim 13, characterised in that the coding marking on the body of rotation (20) is applied directly or to a coding disc (15) which is rotationally rigidly connected to it and in that the optical scanning is effected by means of an optocoupler, preferably by means of at least two photodiodes so that both the rate of rotation and also the direction of rotation can be read out and a higher resolution is achieved than is predefined by the division.

15. Rate-of-rotation sensor according to Claim 9, characterised in that the light is coupled into and out of the part (10), wound on the body of rotation (20), of the fibre coil (8) directly via optical wave guides along the axis of the body of rotation.

**Revendications**

1. Procédé de mesure de vitesse de rotation au moyen d'un interféromètre de Sagnac à fibre optique dans un boîtier de capteur (21), **caractérisé en ce**
   - qu'au moins une partie (10) de la bobine de fibre (8) de l'interféromètre est séparée du boîtier (21) et peut être tournée par rapport au boîtier (21) au moyen d'un moteur d'entraînement (14),
   - que le signal de sortie de l'interféromètre ($I_{out}$) est transmis en tant que signal d'entrée (valeur effective) à un système régulateur (13) lequel rajuste la vitesse de rotation du moteur d'entraîne-

7

ment (14) de telle façon que le signal de sortie de l'interféromètre devient égal à zéro abstraction faite d'un écart de réglage résiduel, et

- que la vitesse de rotation de la partie tournante (10) de la bobine de fibre (8) par rapport au boîtier (21) de l'ensemble du système est interprétée comme critère pour la vitesse de rotation inertielle.

2. Procédé selon la revendication 1, caractérisé en ce que la partie tournante (10) de la bobine de fibre (8) est disposée coaxialement et au centre à l'intérieur du reste de la bobine de fibre de mesure (8).

3. Procédé selon la revendication 2, caractérisé en ce que la conduction de la lumière vers et à partir de la partie tournante (10) de la bobine de fibre (8) dans la direction de l'axe de rotation se fait par l'intermédiaire d'un joint tournant optique (9, 11).

4. Procédé selon la revendication 1, caractérisé en ce que l'ensemble de la bobine de fibre (10) est monté sur un corps de rotation (20) monté de manière tournante et qu'il est rappelé au moyen d'un moteur d'entraînement réglable (14).

5. Procédé selon la revendication 4, caractérisé en ce que, en plus, le système régulateur (12) et le système optique et électro-optique (6) nécessaire pour le fonctionnement du gyroscope à fibre sont disposés sur le corps de rotation (20) pouvant être entraîné par le moteur d'entraînement (14).

6. Capteur de vitesse de rotation, comprenant un interféromètre de Sagnac à fibre optique et un boîtier de capteur (21), caractérisé en ce

- qu'au moins une partie (10) de la bobine de fibre (8) de l'interféromètre est enroulée séparément du boîtier de capteur (21) sur un corps de rotation (20) entraîné par un moteur (14) et pouvant être tourné par rapport au boîtier (21),
- qu'il est prévu un circuit de réglage électronique (13) qui reçoit le signal de sortie de l'interféromètre ($I_{out}$) en tant que signal d'entrée et règle la vitesse de rotation du moteur (14) de telle façon que le signal de sortie de l'interféromètre est ramené à zéro, abstraction faite d'un écart de réglage résiduel, par une rotation correspondante de la partie (10) de la bobine de fibre (8) enroulée sur le corps de rotation (20) par rapport au boîtier (21), et
- qu'il est prévu un dispositif de lecture (15, 16) par l'intermédiaire duquel la vitesse de rotation du corps de rotation (20) par rapport au boîtier de capteur (21) est déterminée en tant que critère pour la vitesse de rotation inertielle.

7. Capteur de vitesse de rotation selon la revendication 6, caractérisé en ce que l'ensemble de la bobine de fibre (10) est monté sur le corps de rotation (20).

8. Capteur de vitesse de rotation selon la revendication 7, caractérisé en ce que, en plus, le circuit de réglage (13) et le système optique et électrooptique (6) nécessaire pour le fonctionnement du gyroscope à fibre sont montés sur le corps de rotation (20).

9. Capteur de vitesse de rotation selon la revendication 6, caractérisé en ce

- que le corps de rotation (20) et la partie (10) de la bobine de fibre (8) enroulée sur celui-ci sont disposés coaxialement et au centre à l'intérieur du reste de la bobine de fibre (8), et
- que la conduction de la lumière vers et à partir de la partie (10) de la bobine de fibre (8) enroulée sur le corps de rotation (20) se fait dans la direction de l'axe de rotation par l'intermédiaire de respectivement un joint tournant optique (9, 11).

10. Capteur de vitesse de rotation selon la revendication 9, caractérisé en ce que les joints tournants optiques (9, 11) sont réalisés par des lentilles à gradient d'indice.

11. Capteur de vitesse de rotation selon la revendication 10, caractérisé en ce que les lentilles à gradient d'indice sont des lentilles Selfoc.

12. Capteur de vitesse de rotation selon l'une des revendications 9, 10 ou 11, caractérisé en ce que, dans le cas de l'utilisation de lumière polarisée rectilignement, des lames $n\lambda/4$ sont intercalées dans la

EP 0 259 509 B1

région du couplage et respectivement du découplage de la lumière, λ désignant la longueur d'onde de la lumière et n, un entier naturel impair.

13. Capteur de vitesse de rotation selon la revendication 9, caractérisé en ce qu'il comprend un repère de codage solidaire en rotation avec le corps de rotation (20) qui est balayé optiquement pour la détermination de la vitesse de rotation.

14. Capteur de vitesse de rotation selon la revendication 13, caractérisé en ce que le repère de codage est réalisé directement sur le corps de rotation (20) ou sur un disque de codage (15) solidaire en rotation avec celui-ci, et que l'exploration optique se fait au moyen d'un optocoupleur, de préférence au moyen d'au moins deux photodiodes, de manière à permettre la lecture de la vitesse de rotation aussi bien que du sens de rotation et à obtenir une résolution plus grande que celle prédéterminée par la graduation.

15. Capteur de vitesse de rotation selon la revendication 9, caractérisé en ce que le couplage et le découplage de la lumière dans la partie (10) de la bobine de fibre (8) enroulée sur le corps de rotation (20) se fait directement par l'intermédiaire de guides-d'ondes optiques le long de l'axe du corps de rotation.

9

# Fig.1

# Fig. 2

Fig.3

Fig.4

## Fig.5